# EUROPÄISCHE PATENTANMELDUNG

(11) **EP 2 431 105 A1**
(43) Veröffentlichungstag der Anmeldung: **21.03.2012**
(21) Anmeldenummer: 10177114.5
(22) Anmeldetag: 16.09.2010
(51) Int. Cl.: B21B 37/16, B21B 37/28, G05B 13/02, B21B 37/58

(54) **Ermittlungsverfahren für Steuergrößen einer Walzstraße mit mehreren Walzgerüsten zum Walzen eines Metallbandes**

(71) Anmelder: Siemens Aktiengesellschaft, 80333 München (DE)
(72) Erfinder: Kurz, Matthias, 91052 Erlangen (DE); Weinzierl, Klaus, 90480 Nürnberg (DE)

(57) **Zusammenfassung**

Vor dem Einlaufen von Bandpunkten (8) in ein vorderes Walzgerüst (1) werden jeweils Parameter (P) erfasst, mit denen der jeweilige Bandpunkt (8) in das vordere Walzgerüst (1) einläuft. Der jeweilige Bandpunkt (8) wird in die aktive Auswertung übernommen. Mittels eines Walzkraftmodells (7) wird für das vordere Walzgerüst (1) mindestens eine beim Walzen des jeweiligen Bandpunktes (8) erwartete Gerüstgröße (G) ermittelt. Mittels des Walzkraftmodells (7) werden weiterhin für hintere Walzgerüste (1) jeweils Parameter (P) des jeweiligen Bandpunktes (8) ermittelt, mit denen der jeweilige Bandpunkt (8) in das jeweilige hintere Walzgerüst (1) einläuft. Mittels des Walzkraftmodells (7) wird weiterhin für die hinteren Walzgerüste (1) jeweils mindestens eine beim Walzen des jeweiligen Bandpunktes (8) erwartete Gerüstgröße (G) ermittelt. Die erwarteten Gerüstgrößen (G) werden mit jeweiligen dem jeweiligen Bandpunkt (8) zugeordneten Sollgerüstgrößen (G^{*}) verglichen. Anhand des Vergleichs wird für die Walzgerüste (1) jeweils mindestens eine jeweilige Einstellgerüstgröße (A^{*}) ermittelt. Zumindest die ermittelten Einstellgerüstgrö-βen (A^{*}) werden dem jeweiligen Bandpunkt (8) vor dem Einlaufen des jeweiligen Bandpunktes (8) in das vordere Walzgerüst (1) zugeordnet und mit dem jeweiligen Bandpunkt (8) durch die Walzstraße wegverfolgt. Anhand der den Bandpunkten (8) zugeordneten Einstellgerüstgrößen (A^{*}) sind zumindest für die hinteren Walzgerüste (1) Trajektorien für die Einstellgerüstgrößen (A*) berechenbar, und zwar für jedes Walzgerüst (1) jeweils mindestens von dem Zeitpunkt, zu dem der jeweilige Bandpunkt (8) in das vordere Walzgerüst (1) einläuft, bis zu dem Zeitpunkt, zu dem der jeweilige Bandpunkt (8) in das jeweilige hintere Walzgerüst (1) einläuft.

## Beschreibung

Ermittlungsverfahren für Steuergrößen einer Walzstraße mit mehreren Walzgerüsten zum Walzen eines Metallbandes

Die vorliegende Erfindung betrifft ein Ermittlungsverfahren für Steuergrößen einer Walzstraße mit mehreren Walzgerüsten zum Walzen eines Metallbandes.

Die vorliegende Erfindung betrifft weiterhin ein Computerprogramm, das Maschinencode umfasst, der von einem Rechner unmittelbar abarbeitbar ist und dessen Abarbeitung durch den Rechner bewirkt, dass der Rechner ein derartiges Ermittlungsverfahren ausführt.

Die vorliegende Erfindung betrifft weiterhin einen Rechner, der derart ausgebildet ist, dass er ein derartiges Ermittlungsverfahren ausführt.

Weiterhin betrifft die vorliegende Erfindung eine Walzstraße mit mehreren Walzgerüsten zum Walzen von Metallband, die mit einem derartigen Rechner ausgestattet ist.

In Walzstraßen - beispielsweise in der Fertigstraße einer Warmbandstraße - wird vorwiegend die Bandgeometrie, d. h. Dicke, Profil und Planheit, eingestellt. Die Walzstraße besteht dazu aus mindestens einem Gerüst, in der Regel aus mehreren Gerüsten. Üblicherweise ist die Walzstraße mit zwei Automatisierungsteilen versehen:

In der Basisautomatisierung befindet sich die technologische Regelung, die in Echtzeit arbeitet und zumeist mit Abtastraten im Bereich von wenigen Millisekunden die Bearbeitung sehr schneller Regelvorgänge erlaubt. Aufgrund der geringen Rechenleistung und der kleinen Abtastzeit sind dort verwendete Modelle gegenüber der Realität in der Regel so vereinfacht, dass nur lokale Aussagen möglich sind. In der Basisautomatisierung wird auch die Banddickenregelung ausgeführt. Sie reagiert vorwiegend rückschauend, benutzt also überwiegend keinerlei Vorkenntnisse, die beispielsweise aufgrund von Vorbandtemperaturmessungen vorhanden wären. Eine Ausnahme ist das FeedForward-AGC, bei dem zumindest teilweise vorgesteuert wird.

In der überlagerten Prozessautomatisierung wird der Setup für den Bandkopf gerechnet. Weiterhin wird dort die Band-zu-Band-Adaption ausgeführt. Die dort programmierten Modelle sind nichtlinear, ermöglichen Aussagen über das globale Verhalten von Band und Walzstraße und sind in der Regel um ein vielfaches aufwändiger als die Modelle der Basisautomatisierung. Üblich ist auch, der Prozessautomatisierung Sensitivitäten zu entnehmen, die zur Aufstellung lokaler Modelle in der Basisautomatisierung verwendet werden können. Im Stand der Technik ist es nicht üblich, die Modelle der Prozessautomatisierung in Echtzeit auszuführen, abgesehen davon, dass natürlich ein Setup für den Bandkopf berechnet wird, bevor der Bandkopf in die Walzstraße einläuft. Die Prozessautomatisierung initialisiert somit die Dickenregelung der Basisautomatisierung am Bandkopf. Der Prozessautomatisierung sind Messwerte wie beispielsweise die Vorbandtemperatur bekannt, mit denen eine vorausschauende Dickenregelung möglich wäre.

In Ausnahmefällen wird auch im Prozessrechner in Echtzeit gerechnet, etwa bei der Regelung der Endwalztemperatur oder bei der Einlaufkorrektur. Bei letzterer werden Informationen zur Walzkraft bei vom Bandkopf bereits durchlaufenen Gerüsten verwendet, um noch schnell eine Korrektur für das nächste Gerüst durchzuführen, bevor dieses erreicht wird. Auch bei der Nachberechnung kann es vorkommen, dass Teile der durchgeführten Rechnungen in Echtzeit erfolgen. Jedoch wird die Nachberechnung grundsätzlich nicht benutzt, um das laufende Band zu steuern, sondern um Modellkorrekturen für nachfolgende Bänder bereitzustellen.

Die genannte Aufgabentrennung erlaubt es im Stand der Technik nicht, komplexe Regelungen in Echtzeit unter Berücksichtigung des gesamten Anlagenzustandes auszuführen. Insbesondere ist es nicht möglich, die Banddicke mittels Verstellung aller Gerüste mit einem vorausschauenden Regelalgorithmus zu variieren, der den Zustand der Anlage insgesamt berücksichtigt. Das Problem ist, dass der Transport eines Materialabschnittes durch die Walzstraße typischerweise 20s dauert, bei der Verwendung des gesamten Anlagenzustandes in der Basisautomatisierung mit dem dort üblichen sehr kleinen Zeittakt aber die Komplexität der Regelung so groß wird, dass sie nicht mehr in Echtzeit bearbeitet werden kann. Wollte man beispielsweise die Anstellungen aller Gerüste mit einem modellprädiktiven Regler steuern, müsste man den gesamten Zustand der Straße beachten, in jedem Zeittakt eine Prognose erstellen und dabei den Prädiktionshorizont wenigstens etwa so groß wählen wie die Durchlaufzeit des Materials durch die Walzstraße.

Im Stand der Technik ist die Basisautomatisierung für die Regelung, der Prozessrechner für den Setup am Bandkopf und die Adaption zuständig. Im Prozessrechner wird üblicherweise mit Bandsegmenten gearbeitet. Das sind Softwarerepräsentationen von Abschnitten des gewalzten Materials vorgegebener Länge. Eine Regelung erfolgt im Stand der Technik im Prozessrechner nur bezüglich der Endwalztemperatur. Hier ist im Stand der Technik eine modellprädiktive Temperaturregelung bekannt, siehe beispielsweise die DE 103 21 791 A1.

Die Basisautomatisierung übernimmt im Wesentlichen die Berechnung des Prozessrechners für den Bandkopf und führt dann entlang des Bandes in Echtzeit eine Regelung aus. Vorzugsweise wird mit einer so genannten AGC zunächst eine Korrektur der berechneten Austrittsdicke durchgeführt, indem die gemessene Walzkraft mit der erwarteten Walzkraft verglichen wird und über die Federkonstante des Gerüstes gemäß dem (linearisierten) Hook'schen Gesetz eine Korrektur der Austrittsdicke erfolgt. Ist beispielsweise die gemessene Walzkraft größer als erwartet, wird das Gerüst stärker aufgedrückt als erwartet, die berechnete Austrittsdicke muss also nach oben korrigiert werden. Da man das nicht will, wird durch Verringern der Anstellung des Gerüstes der Walzspalt sofort um einen entsprechenden Betrag verringert, damit wieder die gewünschte Austrittsdicke entsteht.

Zudem ist die Basisautomatisierung verantwortlich für die Einstellung vorgegebener Züge und Anstellpositionen der Schlingenheber (Looper). Dazu werden die Züge mit den Loopern eingestellt und die Motordrehzahlen der Gerüstmotoren ständig so angepasst, dass die Looper in einer bestimmten Stellung zur Ruhe kommen.

Auch die Dickenregelung befindet sich in der Basisautomatisierung. Sobald eine gemessene Banddicke zur Verfügung steht (d.h. der Bandkopf ist aus der Straße ausgetreten), kann man die gemessene Dicke mit der erwarteten Banddicke vergleichen und den Fehler im Sinne einer Nullpunktkorrektur auf den Nullpunkt der Anstellung aufschalten. Da in der Regel nur hinter dem letzten Gerüst die Dicke gemessen wird, muss der Fehler in der Regel über mehrere Gerüste verteilt werden. Eine relativ einfache Steuerung korrigiert die Anstellungen der Gerüste ausgehend vom letzten Gerüst und passt ggf. auch die Gerüstdrehzahlen geeignet an.

Stand der Technik ist weiterhin ein Smith-Prädiktor für die Dickenregelung. Hierbei wird, ausgehend von der aktuellen Dickenabweichung, zunächst das wieder abgezogen, was früher aufgeschaltet wurde. Die früher aufgeschalteten Werte werden einem Speicher entnommen. Die bereinigte Abweichung wird einer gleitenden Mittelwertbildung zugeführt, begrenzt, nochmals leicht geglättet und auf das letzte Gerüst unmittelbar aufgeschaltet. Vorgelagerte Gerüste erhalten ebenfalls eine Aufschaltung, aber mit einer jeweiligen Zeitkonstante gedämpft, die der Laufzeit eines Bandpunktes vom jeweiligen Gerüst bis zum Dickenmessgerät entspricht. So erhalten auch vorgelagerte Gerüste eine entsprechende Korrektur.

Das letzte Gerüst ist üblicherweise das Leitgerüst für die Bandgeschwindigkeit. Eingriffe in die Anstellung von Gerüsten, die eine Dickenänderung bewirken, haben zur Folge, dass auch die Geschwindigkeiten der vorgelagerten Gerüste geändert werden müssen. Selbstverständlich wird im Stand der Technik die Drehzahl der Gerüstmotoren vorgelagerter Gerüste geeignet vorgesteuert, während die Banddicke verändert wird.

Bei Grobblechstraßen ist ein Verfahren bekannt, bei dem
- vor dem Einlaufen des Blechs in das Walzgerüst Punkte entlang des Blechs erfasst werden,
- mittels eines Walzkraftmodells für alle Punkte erwartete Walzkräfte und Austrittsdicken berechnet werden,
- die erwarteten Austrittsdicken mit den Punkten zugeordneten Solldicken verglichen werden,
- aus den Vergleichen zu jedem Punkt zugeordnete Gerüstanstellungen berechnet werden,
- die Gerüstanstellungen noch vor dem Einlaufen des Blechs zu einer Kurve derart verbunden werden, dass die Anstellung als Funktion des Blechfortschrittes gegeben ist, und
- das Blech gemäß der vorgegebenen Anstellungskurve des Gerüstes gewalzt wird.

Damit kann bei Grobblech ein Verlauf der Dicke entlang des Blechs eingestellt werden.

Grobblech ist, in Laufrichtung des Grobblechs gesehen, relativ kurz. Das Grobblech wird daher im Stand der Technik in relativ wenige Punkte aufgeteilt, beispielsweise sieben Punkte. Aufgrund der geringen Anzahl an Punkten ist es bei Grobblech möglich, die gesamte Rechnung vor Einlauf des Grobblechs in das Gerüst auszuführen. Weiterhin gibt es bei Grobblech keine Situationen, zu denen gleichzeitig mehr als ein Gerüst das Grobblech erfasst und dadurch den Produktionsprozess verkoppelt.

Das zuletzt beschriebene Verfahren wird neuerdings auch bei Steckelwalzwerken angewendet. Steckelwalzwerke weisen - ebenso wie Grobblechstraßen - in der Regel nur ein einziges Walzgerüst auf.

Die Aufgabe der vorliegenden Erfindung besteht darin, Möglichkeiten zu schaffen, mittels derer bei Bändern eine möglichst vorausschauende Regelung der Banddicke in der Walzstraße möglich ist, wobei bekannte Störungen und Anlagengrenzen berücksichtigt werden können.

Die Aufgabe wird durch ein Ermittlungsverfahren mit den Merkmalen des Anspruchs 1 gelöst. Vorteilhafte Ausgestaltungen des erfindungsgemäßen Ermittlungsverfahrens sind Gegenstand der abhängigen Ansprüche 2 bis 14.

Erfindungsgemäß ist vorgesehen, ein Ermittlungsverfahren für Steuergrößen einer Walzstraße mit mehreren Walzgerüsten zum Walzen eines Metallbandes dadurch auszugestalten,
- dass vor dem Einlaufen von Bandpunkten des Metallbandes in ein vorderes Walzgerüst der Walzstraße jeweils anfängliche Parameter des jeweiligen Bandpunktes erfasst werden, mit denen der jeweilige Bandpunkt in das vordere Walzgerüst einläuft, und der jeweilige Bandpunkt in die aktive Auswertung übernommen wird,
- dass mittels eines Walzkraftmodells für das vordere Walzgerüst mindestens eine beim Walzen des jeweiligen Bandpunktes in dem vorderen Walzgerüst erwartete Gerüstgröße ermittelt wird,
- dass mittels des Walzkraftmodells weiterhin für dem vorderen Walzgerüst nachgeordnete hintere Walzgerüste jeweils Parameter des jeweiligen Bandpunktes ermittelt werden, mit denen der jeweilige Bandpunkt in das jeweilige hintere Walzgerüst einläuft,
- dass mittels des Walzkraftmodells weiterhin für die hinteren Walzgerüste jeweils mindestens eine beim Walzen des jeweiligen Bandpunktes in dem jeweiligen hinteren Walzgerüst erwartete Gerüstgröße ermittelt wird,
- dass die erwarteten Gerüstgrößen der Walzgerüste mit jeweiligen dem jeweiligen Bandpunkt zugeordneten Sollgerüstgrößen verglichen werden und für das vordere Walzgerüst und die hinteren Walzgerüste anhand des Vergleichs jeweils mindestens eine jeweilige Einstellgerüstgröße ermittelt wird,
- dass zumindest die ermittelten Einstellgerüstgrößen dem jeweiligen Bandpunkt vor dem Einlaufen des jeweiligen Bandpunktes in das vordere Walzgerüst zugeordnet und mit dem jeweiligen Bandpunkt durch die Walzstraße wegverfolgt werden,
- dass anhand der den Bandpunkten zugeordneten Einstellgerüstgrößen zumindest für die hinteren Walzgerüste Trajektorien für die Einstellgerüstgrößen berechenbar sind,
- dass die Trajektorien sich für jedes hintere Walzgerüst jeweils mindestens von dem Zeitpunkt, zu dem der jeweilige Bandpunkt in das vordere Walzgerüst einläuft, bis zu dem Zeitpunkt erstrecken, zu dem der jeweilige Bandpunkt in das jeweilige hintere Walzgerüst einläuft.

Als Einstellgerüstgrößen werden im Regelfall die Walzkraft und die Walzgerüstanstellung verwendet. Prinzipiell sind jedoch auch andere Einstellgerüstgrößen verwendbar, sei es zusätzlich, sei es alternativ zu den oben genannten Größen. Beispiele weiterer Einstellgerüstgrößen sind das Walzmoment, die Züge (ein- und auslaufseitig), die Rückbiegung und eventuell eine Zwischengerüstkühlung.

Die Parameter der Bandpunkte können Temperaturparameter sein, beispielsweise die Temperatur oder die Enthalpie, gegebenenfalls einschließlich Phasenanteilen. Alternativ oder zusätzlich können die Parameter der Bandpunkte Geometrieparameter sein wie beispielsweise die Banddicke, das Profil und die Planheit.

Als Gerüstgrößen kommen insbesondere auslaufseitige Geometrieparameter und die Walzkraft in Frage.

Die Einstellgerüstgrößen sind vom Ansatz her Steuergrößen der Walzstraße. Der Begriff Einstellgerüstgrößen ist aber enger gefasst als der Begriff Steuergrößen, da die Einstellgerüstgrößen stets auf ein bestimmtes der Walzgerüste bezogen sind.

Es ist möglich, dass die Trajektorien auch für das vordere Walzgerüst ermittelbar sind, sofern die Ermittlung der Einstellgerüstgrößen rechtzeitig vor dem Einlaufen des jeweiligen Bandpunktes in das vordere Walzgerüst abgeschlossen ist. Es ist aber ausreichend, wenn die Trajektorien der Einstellgerüstgrößen nur für die hinteren Walzgerüste berechenbar sind.

Weiterhin ist es prinzipiell ausreichend, wenn die Berechenbarkeit besteht. Ein tatsächliches Berechnen ist nicht zwingend erforderlich.

Bereits durch die erfindungsgemäße Vorgehensweise ist es beispielsweise möglich, im Prozessrechner nicht nur für den Bandkopf zu rechnen, sondern das gesamte Band zu betrachten. Dadurch können gesamtheitliche Strategien angewendet werden, etwa die Minimierung des Energieverbrauchs oder die Maximierung des Durchsatzes. Auch kann Material mit zeitlich variablen Sollwerten hergestellt werden, z. B. Material mit einem Dickenkeil.

In der Regel erfolgt jedoch das Berechnen der Trajektorien. In diesem Fall sind zwei Möglichkeiten zur Verwendung der Trajektorien gegeben.

Zum einen ist es möglich, dass die Trajektorien zumindest teilweise an eine Basisautomatisierung übermittelt werden, so dass sie der Basisautomatisierung als Verlauf von Sollstellgrößen für die hinteren Walzgerüste zur Verfügung stehen. Dadurch können die Regler der Basisautomatisierung vorausschauend regeln und beispielsweise Sollwertsprünge besser vorsteuern.

In der Regel werden die Trajektorien mit einer Modellierungsperiode berechnet. Vorzugsweise werden die Trajektorien zumindest für einen Regelzeitraum an die Basisautomatisierung übermittelt, der größer als die Modellierungsperiode ist. Dadurch ist eine kontinuierliche Regelung durch die Basisautomatisierung auch dann möglich, wenn der übergeordnete Prozessrechner, der das erfindungsgemäße Ermittlungsverfahren ausführt, aufgrund besonderer Umstände außer Tritt kommt (der Prozessrechner sozusagen "mal hustet").

Zum anderen ist es möglich, dass die Trajektorien vor dem Ansteuern des Walzgerüsts, für das die jeweilige Trajektorie gültig ist, ausgewertet werden und dass in Abhängigkeit von der Auswertung entschieden wird, ob und ggf. auf welche Weise die Einstellgerüstgrößen variiert werden. Dadurch können beispielsweise Belastungen, die sich erst aus der Zusammenschau der Walzgerüste ergeben, ermittelt und ausgewertet werden. Ein Beispiel einer derartigen Belastung ist der Gesamtleistungsbedarf der Walzstraße. Auch kann vorausschauend erkannt werden, ob Leistungsgrenzen der Anlage - beispielsweise das maximal mögliche Drehmoment eines Walzgerüstantriebs - überschritten werden. Weiterhin können auch Belastungen ermittelt werden, die sich erst aus dem zeitlichen Verlauf der Trajektorien ergeben, beispielsweise die thermische Belastung der Walzgerüstantriebe.

Wie bereits erwähnt, werden in der Regel die Trajektorien mit einer Modellierungsperiode berechnet. Die Auswertung der Trajektorien erfolgt hingegen mit einem Auswertungshorizont, der ein Vielfaches der Modellierungsperiode ist. Mit "Vielfachem" ist nicht notwendigerweise ein ganzzahliges Vielfaches gemeint, sondern ein erheblich größerer Wert. Insbesondere ist das Verhältnis von Auswertungshorizont zu Modellierungsperiode in der Regel mindestens 10:1.

Im Rahmen der vorliegenden Erfindung ist es ausreichend, wenn die Trajektorien der Einstellgerüstgrößen ermittelbar sind. Vorzugsweise ist es jedoch vorgesehen, dass dem jeweiligen Bandpunkt auch die erwarteten Gerüstgrößen zugeordnet werden und dass auch die Trajektorien für die erwarteten Gerüstgrö-βen berechenbar sind.

Vorzugsweise wird das erfindungsgemäße Ermittlungsverfahren zyklisch und in Echtzeit ausgeführt. Anzustreben ist dies insbesondere für den Zeitraum, während dessen mindestens eines der Walzgerüste der Walzstraße im Eingriff ist, wenn also mindestens ein Punkt des Metallbandes gewalzt wird.

Vorzugsweise sind Ermittlungsvorschriften, mittels derer die erwarteten Gerüstgrößen, die Parameter der Bandpunkte und die Einstellgerüstgrößen ermittelt werden, stetige Abbildungen. Dadurch ergeben sich - zumindest in aller Regel - relativ glatte Trajektorien.

Vorzugsweise ist vorgesehen, dass nach dem Auslaufen des jeweiligen Bandpunktes aus der Walzstraße zumindest ein endgültiger Parameter des jeweiligen Bandpunktes erfasst wird, dass das Walzkraftmodell anhand des erfassten endgültigen Parameters und des hinter dem letzten Walzgerüst der Walzstraße erwarteten Parameters in Echtzeit adaptiert wird und dass die erwarteten Parameter derjenigen Bandpunkte, die bereits in die Walzstraße eingelaufen sind, in Echtzeit nachgeführt werden.

Die entsprechende Vorgehensweise ist für den Parameter "Temperatur" aus der DE 101 56 008 A1 bekannt. Für den Parameter "Geometrie" ist die entsprechende Vorgehensweise in der Patentanmeldung "Echtzeit-Ermittlungsverfahren für Temperatur und Geometrie eines Metall-Warmbandes in einer Fertigstraße", die zeitgleich mit dieser Patentanmeldung eingereicht wird, beschrieben. Die genannte Patentanmeldung trägt das interne Aktenzeichen der Anmelderin 201015307.

Vorzugsweise ist weiterhin vorgesehen, dass das erfindungsgemäße Ermittlungsverfahren nach dem Adaptieren des Walzkraftmodells und dem Nachführen der erwarteten Parameter für diejenigen Bandpunkte, deren Parameter nachgeführt wurden, erneut ausgeführt wird und dass für die erneute Ausführung des Ermittlungsverfahrens dasjenige Walzgerüst als vorderes Walzgerüst angesehen wird, in das der jeweilige Bandpunkt, dessen Parameter nachgeführt wurden, als nächstes einläuft. Dadurch wird erreicht, dass die Trajektorien laufend nachgeführt und aktualisiert werden, und zwar auch bezüglich derjenigen Bandpunkte, die bereits in die Walzstraße eingelaufen sind.

Vorzugsweise ist spätestens zum Zeitpunkt des Erfassens der anfänglichen Parameter des jeweiligen Bandpunktes ein Leitgeschwindigkeitsverlauf bekannt, mit dem der jeweilige Bandpunkt die Walzstraße durchlaufen soll. Eine Möglichkeit zum Ermitteln eines Leitgeschwindigkeitsverlaufs ist insbesondere in der älteren, am Anmeldetag der vorliegenden Erfindung noch nicht offen gelegten Europäischen Patentanmeldung 10162135.7 vom 06.05.2010 beschrieben.

Die Aufgabe wird weiterhin durch ein Computerprogramm der eingangs genannten Art gelöst. In diesem Fall bewirkt die Abarbeitung des Maschinencodes durch den Rechner, dass der Rechner ein erfindungsgemäßes Ermittlungsverfahren ausführt.

Die Aufgabe wird weiterhin durch einen Rechner gelöst, der derart ausgebildet ist, dass er ein erfindungsgemäßes Ermittlungsverfahren ausführt.

Die Aufgabe wird weiterhin durch eine Walzstraße mit mehreren Walzgerüsten zum Walzen von Metallband gelöst, die mit einem erfindungsgemäßen Rechner ausgestattet ist.

Weitere Vorteile und Einzelheiten ergeben sich aus der nachfolgenden Beschreibung von Ausführungsbeispielen in Verbindung mit den Zeichnungen. Es zeigen in Prinzipdarstellung:
- FIG 1: schematisch eine Walzstraße,
- FIG 2: schematisch ein Metallband,
- FIG 3: ein Ablaufdiagramm,
- FIG 4: Trajektorien,
- FIG 5: ein Ablaufdiagramm,
- FIG 6 und 7: je eine Trajektorie,
- FIG 8 und 9: Diagramme und
- FIG 10 bis 12: Ablaufdiagramme.

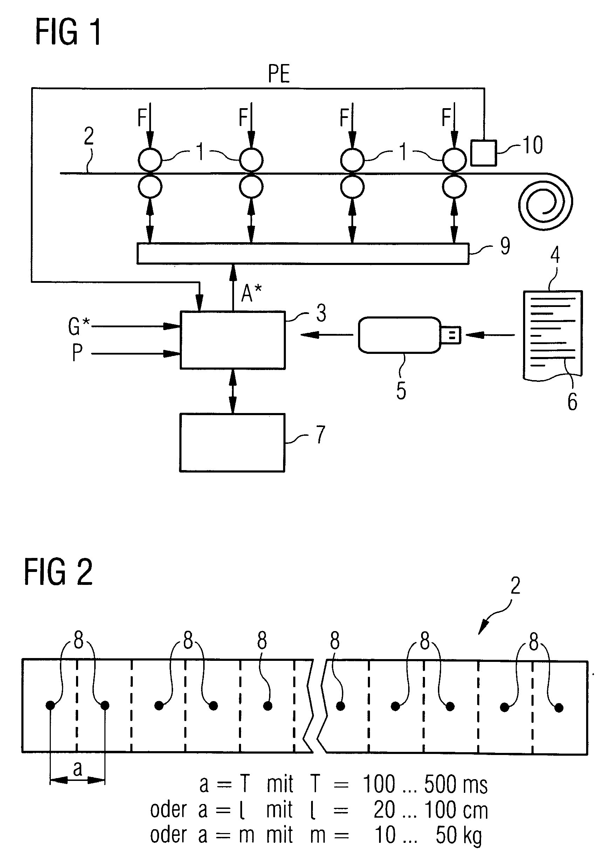

Gemäß FIG 1 weist eine Walzstraße mehrere Walzgerüste 1 auf. Dargestellt sind in FIG 1 vier derartige Walzgerüste 1. Diese Anzahl ist in der Regel das Minimum. Oftmals sind sogar fünf bis acht Walzgerüste 1 vorhanden, beispielsweise sechs oder sieben Walzgerüste 1. In der Walzstraße wird ein Metallband 2 gewalzt. Das Metallband 2 kann alternativ in einer Vor- oder Fertigstraße warm oder in einer Tandemstraße kalt gewalzt werden. Das Metallband 2 kann beispielsweise aus Stahl, Aluminium oder Kupfer bestehen.

Die Walzstraße ist mit einem Rechner 3 ausgestattet. Der Rechner 3 ist mit einem Computerprogramm 4 programmiert. Das Computerprogramm 4 ist dem Rechner 3 beispielsweise über ein übliches Speichermedium 5 - beispielsweise einen USB-Memorystick - zugeführt worden. Aufgrund der Programmierung mit dem Computerprogramm 4 ist der Rechner 3 derart ausgebildet, dass er ein Ermittlungsverfahren ausführt, das nachstehend näher erläutert wird.

Das Computerprogramm 4 umfasst Maschinencode 6. Der Maschinencode 6 ist von dem Rechner 3 unmittelbar abarbeitbar. Die Abarbeitung des Maschinencodes 6 durch den Rechner 3 bewirkt die Ausführung des erfindungsgemäßen Ermittlungsverfahrens.

Das Verhalten des Metallbandes 2 in der Walzstraße wird im Rechner 3 mittels eines Walzkraftmodells 7 modelliert. Entsprechende Modelle sind Fachleuten allgemein bekannt.

Zur Modellierung des Bandes 2 wird das Band 2 gemäß FIG 2 innerhalb des Rechners 3 durch eine Vielzahl von Bandpunkten 8 repräsentiert. Jede bezüglich eines der Bandpunkte 8 getroffene Aussage gilt selbstverständlich für einen entsprechenden Längenbereich des Metallbandes 2, wobei Trennungslinien zwischen den Bandpunkten 8 üblicherweise in der Mitte zwischen den Bandpunkten 8 liegen.

Die Anzahl an Bandpunkten 8 beträgt in der Regel mehrere 100 bis über 1000 Bandpunkte 8. Ein Abstand a der Bandpunkte 8 voneinander kann beispielsweise durch einen festen Zeittakt T definiert sein. Der Zeittakt T liegt in diesem Fall in der Regel bei 100...500 ms, beispielsweise bei 150...300 ms. Alternativ kann der Abstand a durch einen geometrischen Abstand von beispielsweise 20...100 cm definiert sein. Vorzugsweise ist der Abstand a zwischen den Bandpunkten 8 durch die zwischen jeweils zwei Bandpunkten 8 befindliche Masse an Metallband 5 definiert. In diesem Fall kann der Abstand a beispielsweise zwischen 10...50 kg liegen, insbesondere zwischen 15...30 kg.

Wie bereits erwähnt, wird das Metallband 2 bezüglich seiner Repräsentation im Rechner 3 in eine Vielzahl von Bandpunkten 8 aufgeteilt. Die korrespondierten Abschnitte des realen Metallbandes 2 laufen nacheinander in ein vorderes Walzgerüst 1 der Walzstraße ein, beispielsweise in das erste Walzgerüst 1 der Walzstraße. Bereits vor dem Einlaufen der Abschnitte des realen Metallbandes 2 werden die jeweils korrespondierenden Bandpunkte 8 in die aktive Auswertung übernommen.

Das Übernehmen in die aktive Auswertung ist mit einer Erfassung von Anfangsparametern P der entsprechenden Bandpunkte 8 verbunden. In der Regel werden die Anfangsparameter P nacheinander für jeweils einen der Bandpunkte 8 erfasst. Es ist jedoch alternativ möglich, die Erfassung der Anfangsparameter P - ggf. einschließlich der Übernahme der entsprechenden Bandpunkte 8 in die aktive Auswertung - gruppenweise vorzunehmen. Es ist sogar möglich, die Erfassung der Anfangsparameter P für alle Bandpunkte 8 auf einmal vorzunehmen. Die Übernahme der entsprechenden Bandpunkte 8 in die aktive Auswertung erfolgt jedoch einzeln oder gruppenweise, also nicht für alle Bandpunkte 8 des Metallbandes 2 auf einmal.

Es ist möglich, die Erfassung der Parameter P messtechnisch durchzuführen. Alternativ ist eine anderweitige Erfassung möglich. Beispielsweise können die Parameter P dem Rechner 3 von einer übergeordneten Recheneinrichtung oder von einem anderen Steuerrechner, der eine der Walzstraße vorgeordnete Anlage steuert, zugeführt werden. Beispiele derartiger vorgeordneter Anlagen sind ein Ofen, eine Vorstraße und eine Stranggießanlage.

Der Parameter P kann beispielsweise die Temperatur des entsprechenden Bandpunktes 8, ein Phasenanteil oder die Enthalpie sein. Auch Kombinationen hiervon sind möglich. Ebenso ist möglich, dass der Parameter P die Geometrie des betreffenden Bandpunktes 8 beschreibt, beispielsweise dessen Dicke, dessen Profil oder dessen Planheit. Auch eine Kombination mehrerer Geometrieparameter ist möglich. Auch ist es möglich, sowohl Temperaturparameter als auch Geometrieparameter zu erfassen.

Im Falle einer Temperatur kann ein einzelner Wert gegeben sein, beispielsweise der Wert unmittelbar am Zentrum des durch den Bandpunkt 8 definierten Bandsegmentes. Beispielsweise kann die Temperatur an der Ober- oder Unterseite oder - in Banddickenrichtung gesehen - in der Mitte des entsprechenden Ortes verwendet werden. Alternativ kann es sich um ein Temperaturverteilung handeln. Die Temperaturverteilung kann in diesem Fall in Banddickenrichtung, in Bandbreitenrichtung und/oder evtl. auch in Bandlängsrichtung ortsaufgelöst sein. Auch eine Mittelwertbildung in einer oder mehrerer der genannten Richtungen ist möglich. Auch sind Kombinationen möglich. Beispielsweise kann in Bandbreitenrichtung ortsaufgelöst die Temperatur an der Oberseite verwendet werden. Weiterhin kann anstelle der Temperatur auch die Enthalpie verwendet werden. Ggf. können weiterhin Phasenanteile und Kenngrößen für Materialeigenschaften wie beispielsweise die Korngröße und/oder die Verfestigung berücksichtigt werden.

In analoger Weise kann auch im Falle einer Geometrie ein einzelner Wert gegeben sein, beispielsweise die Banddicke unmittelbar am Zentrum des durch den Bandpunkt 8 definierten Bandsegmentes. Alternativ kann es sich um eine Geometrieverteilung handeln. Die Geometrieverteilung kann im Falle der Banddicke in Bandbreitenrichtung und/evtl. auch in Bandlängsrichtung ortsaufgelöst sein. Im Falle des Bandprofils und/oder der Bandplanheit kann die Geometrieverteilung evtl. in Bandlängsrichtung ortsaufgelöst sein. Analog zur Temperaturverteilung ist auch eine Mittelwertbildung in Bandlängsrichtung, im Falle der Banddicke alternativ oder zusätzlich auch in Bandbreitenrichtung, möglich.

Die Bandpunkte 8 werden vom Rechner 4 in einem Schritt S1 in die aktive Auswertung übernommen. Soweit erforderlich, nimmt der Rechner 3 im Schritt S1 für die entsprechenden Bandpunkte 8 auch Sollgerüstgrößen G^{*} entgegen.

Die Sollgerüstgrößen G^{*} sind Größen, die beim Walzen des entsprechenden Bandpunktes 8 in den Walzgerüsten 1 auftreten sollen. Sie sind aufgeschlüsselt für die einzelnen Walzgerüste 1 definiert. Es kann sich bei den Sollgerüstgrößen G^{*} um Stellgrößen des entsprechenden Walzgerüsts 1 handeln, beispielsweise die Walzkraft F, die Anstellung s oder das Walzmoment M. Vorzugsweise handelt es sich um Geometrieparameter wie beispielsweise die auslaufseitige Solldicke, das auslaufseitige Sollprofil und/oder die auslaufseitige Sollplanheit. Auch kann es sich um relative Größen handeln, beispielsweise einen bestimmten Anteil an der gesamten, von allen Walzgerüstantrieben aufgebrachten Leistung. In einem Schritt S2 ordnet der Rechner 3 die Anfangsparameter P und die Sollgrößen G* den entsprechenden Bandpunkten 8 zu.

Vorzugsweise ist ein Schritt S3 vorhanden, in dem der Rechner 3 für diejenigen Bandpunkte 8, die er im Schritt S1 in die Auswertung übernommen hat, einen Leitgrößenverlauf ermittelt oder entgegen nimmt. Der Leitgrößenverlauf gibt an, mit welchem Geschwindigkeitsprofil (beispielsweise als Funktion der Zeit) die Bandpunkte 8 die Walzstraße durchlaufen sollen. Ein geeignetes Ermittlungsverfahren für den Leitgrößenverlauf ist beispielsweise in der bereits erwähnten Europäischen Patentanmeldung 10162135.7 vom 06.05.2010 beschrieben.

Der Leitgrößenverlauf wirkt - selbstverständlich - stets auf das gesamte Metallband 2. Weiterhin ist für jeden Zeitpunkt der Leitgrößenverlauf für Bandpunkte 8, die bereits in die Auswertung übernommen wurden, bereits bestimmt. Im Schritt S3 wird daher nur die Ergänzung des Leitgrößenverlaufs entgegengenommen bzw. ermittelt, also der Leitgrößenverlauf für den Zeitraum, in dem die entsprechenden Bandpunkte 8 des Schrittes S1 aus der Walzstraße auslaufen.

In einem Schritt S4 selektiert der Rechner 3 das vordere Walzgerüst 1, beispielsweise das erste Walzgerüst 1 der Walzstraße. In einem Schritt S5 ermittelt der Rechner 3 für jeden Bandpunkt 8 des Schrittes S1 für das selektierte Walzgerüst 1 mindestens eine erwartete Gerüstgröße G, die beim Walzen des entsprechenden Bandpunktes 8 in dem selektierten Walzgerüst 1 erwartet wird. Die Ermittlung erfolgt mittels des Walzkraftmodells 7.

Als mögliche Gerüstgrößen G kann der Rechner 3 insbesondere mindestens eine der nachfolgenden Größen ermitteln:

Die Walzkraft F, den einlaufseitigen Zug im Metallband 2, den auslaufseitigen Zug im Metallband 2, die Gerüstanstellung s, die Gerüstdrehzahl bzw. die Walzenumfangsgeschwindigkeit, das Walzmoment M, die Anstellung eines ein- oder auslaufseitig angeordneten Schlingenhebers, Sollwerte für Kühlmittelstellglieder, die auf die Walzen des betreffenden Walzgerüsts 1 und/oder das Metallband 2 wirken, auslaufseitige Geometrieparameter der entsprechenden Bandpunkte 8, temperaturbezogene Parameter der entsprechenden Bandpunkte 8 beim Auslaufen usw.. Die ermittelten Größen ordnet der Rechner 3 in einem Schritt S6 den entsprechenden Bandpunkten 8 zu.

In einem Schritt S7 prüft der Rechner 3, ob das selektierte Walzgerüst 1 das letzte Walzgerüst 1 der Walzstraße ist. Wenn dies nicht der Fall ist, geht der Rechner 3 in einem Schritt S8 über, in dem er das nächste Walzgerüst 1 selektiert.

In einem Schritt S9 ermittelt der Rechner 3 für die entsprechenden Bandpunkte 8 mittels des Walzkraftmodells 7 jeweils Parameter P der Bandpunkte 8, mit denen die betreffenden Bandpunkte 8 in das nunmehr selektierte Walzgerüst 1 einlaufen.

Soweit Geometrieparameter der Bandpunkte 8 betroffen sind, ist der Schritt S9 trivial, da die Auslaufgeometrie, mit der ein bestimmter Bandpunkt 8 aus dem zuvor selektierten Walzgerüst 1 ausläuft, mit der Einlaufgeometrie identisch ist, mit der dieser Bandpunkt 8 in das neu selektierte Walzgerüst 1 einläuft. Soweit Temperaturparameter betroffen sind, kann beispielsweise anhand des Abstands der Walzgerüste 1 voneinander in Verbindung mit dem Leitgeschwindigkeitsverlauf (oder einer fest vorgegebenen Geschwindigkeit) die Temperaturentwicklung der Bandpunkte 8 fortgeschrieben werden. Soweit erforderlich, kann eine Kühlung durch eine entsprechende Zwischengerüstkühleinrichtung berücksichtigt werden.

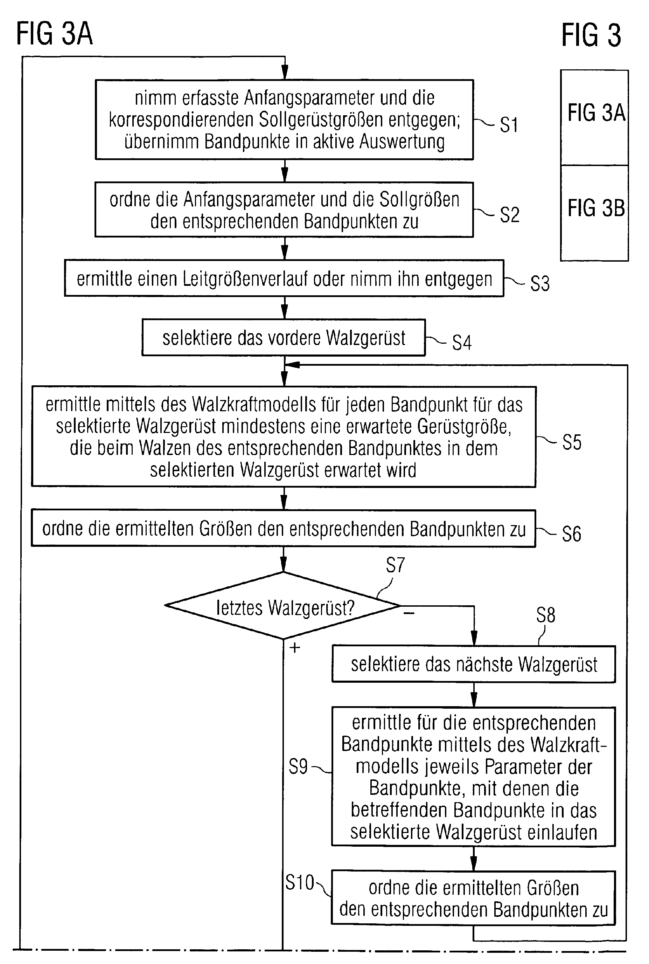

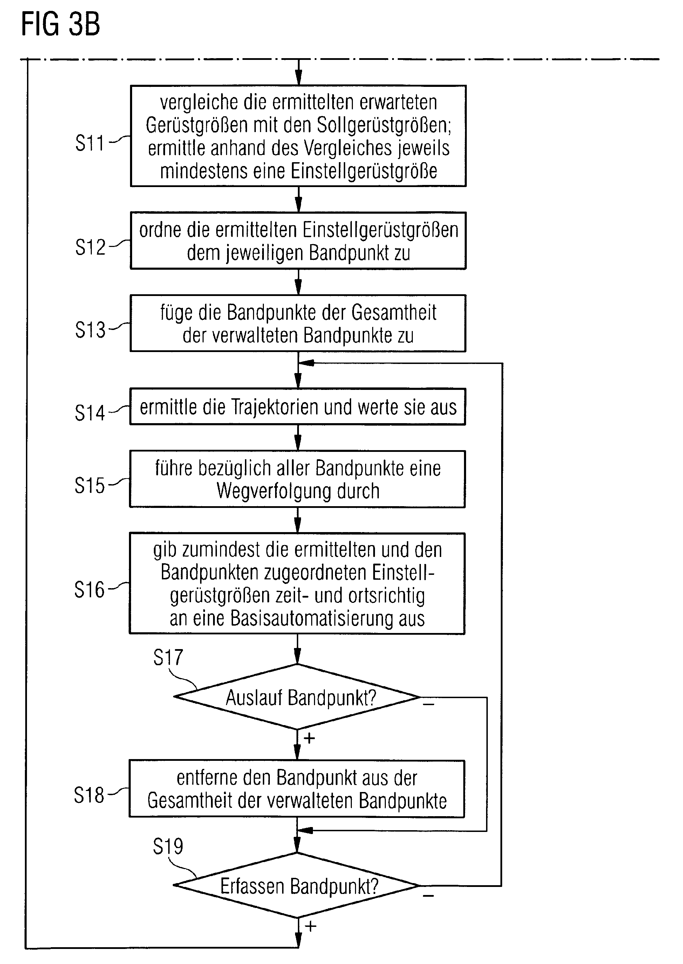

Auch die im Schritt S9 ermittelten Größen werden den jeweiligen Bandpunkten 8 zugeordnet, siehe einen Schritt S10 in FIG 3. Vom Schritt S10 geht der Rechner 3 zum Schritt S5 zurück.

Aufgrund der Art der Gleichungen des Walzkraftmodells 7 ist in aller Regel gewährleistet, dass die Ermittlungsvorschriften, mittels derer die erwarteten Gerüstgrößen G und die Parameter P der Bandpunkte 8 ermittelt werden, stetige Abbildungen sind. Es treten also, wenn die Eingangsgrößen der Ermittlungsvorschriften sich geringfügig ändern, keine sprungartigen Änderungen der ermittelten Ausgangsgrößen auf.

Falls der Rechner 3 im Schritt S7 feststellt, dass er beim letzten Walzgerüst 1 angelangt ist, geht er zu einem Schritt S11 über. Im Schritt S11 vergleicht der Rechner 3 die von ihm ermittelten erwarteten Gerüstgrößen G mit den Sollgerüstgrö-βen G^{*} des Schrittes S1. Weiterhin ermittelt der Rechner 3 im Schritt S11 für jeden Bandpunkt 8 des Schrittes S1 anhand des Vergleiches jeweils mindestens eine Einstellgerüstgröße A^{*}. In der Regel - wenn auch nicht zwingend - ermittelt der Rechner 3 im Schritt S11 für jedes Walzgerüst 1 eine Sollanstellung **S^{*}** und eine Sollwalzkraft F^{*}.

Die ermittelten Einstellgerüstgrößen A^{*} ordnet der Rechner 3 in einem Schritt S12 dem jeweiligen Bandpunkt 8 zu. In einem Schritt S13 fügt der Rechner 3 diejenigen Bandpunkte 8, denen er im Schritt S12 die Einstellgerüstgrößen A^{*} zugeordnet hat, der Gesamtheit der von ihm verwalteten Bandpunkte 8 zu. Die Gesamtheit der vom Rechner 3 verwalteten Bandpunkte 8 repräsentiert diejenigen Abschnitte des Metallbandes 2, die bereits in die aktive Auswertung übernommen wurden und die noch nicht aus der Walzstraße ausgelaufen sind. Der Schritt S13 und mit ihm auch die Schritte S1 bis S12 werden daher ausgeführt, bevor die entsprechenden Bandpunkte 8 in das vordere Walzgerüst 1 einlaufen.

Analog zur Ermittlung der Gerüstgrößen G und der Parameter P der Bandpunkte 8 sind in aller Regel auch die Ermittlungsvorschriften, anhand derer die Einstellgerüstgrößen A^{*} ermittelt werden, stetige Abbildungen.

Mit Vorteil wird bei den Berechnungen eine Zielfunktion aufgestellt, in die zumindest die Abweichung zwischen einer erwarteten Gerüstgröße G hinter dem jeweiligen Walzgerüst 1 und nachfolgenden Walzgerüsten 1, beispielsweise eine erwartete Dicke von der zugehörigen Sollgerüstgröße, eingeht, sowie Ungleichungsnebenbedingungen für die Anlagengrenzen formuliert. Durch Minimierung der Zielfunktion können unter Beachtung der Ungleichungsnebenbedingungen mittels eines mathematischen Minimierungsalgorithmus, z. B. eines SQP-Verfahrens oder eines Gauss-Newton-Verfahrens, die erforderlichen Anstellungen für die Gerüste berechnet werden.

In einem Schritt S14 ermittelt der Rechner 3 die Trajektorien und wertet sie aus. In einem Schritt S15 führt der Rechner 3 bezüglich aller Bandpunkte 8 der Gesamtheit von Bandpunkten 8 eine Wegverfolgung durch. Der Rechner 3 ermittelt also für jeden verwalteten Bandpunkt 8, wo sich der jeweilige Bandpunkt 8 gerade aufhält.

In einem Schritt S16 gibt der Rechner 3 zumindest die ermittelten und den Bandpunkten 8 zugeordneten Einstellgerüstgrö-βen A^{*} zeit- und ortsrichtig an eine Basisautomatisierung 9 aus. Die Basisautomatisierung 9 nimmt die Einstellgerüstgrö-βen A^{*} entgegen und regelt unter Verwendung der Einstellgerüstgrößen A^{*} die Walzstraße. Die Basisautomatisierung 9 kann die vom Rechner 3 übermittelten Werte als Vorsteuerung benutzen und ggf. noch eine lokale Regelung ausführen, die Abweichungen von den übergebenen Trajektorien minimiert. Ein solches Verfahren ist bekannt. Diese Prognose kann man beispielsweise zur Ermittlung des Energieverbrauchs, zur Prognose des künftigen Stromverbrauchs, zur Vorsteuerung anderer Regelkreise, zur Berechnung von Motorbelastungen usw. verwenden. Insbesondere können derartige Berechnungen zu einer Korrektur der Anlagengrenzen führen (beispielsweise einer Reduktion der Motorleistung in 5s wegen thermischer Überlast, die nur kurzzeitig zulässig ist), die im nächsten Zeittakt des Rechners 3 einbezogen werden können.

In einem Schritt S17 prüft der Rechner 3, ob gerade ein Bandpunkt 8 aus der Walzstraße ausläuft. Falls dies der Fall ist, entfernt der Rechner 3 in einem Schritt S 18 den entsprechenden Bandpunkt 8 aus der Gesamtheit der von ihm verwalteten Bandpunkte 8.

In einem Schritt S19 prüft der Rechner 3, ob gerade (mindestens) ein Bandpunkt 8 neu in die Auswertung übernommen werden soll. Je nach Ergebnis der Prüfung des Schrittes S19 geht der Rechner 3 zum Schritt S1 oder zum Schritt S14 zurück.

Die Schritte S17 und S19 sind stets erforderlich, also nicht nur dann, wenn der Abstand a der Bandpunkte 8 voneinander als geometrischer Abstand oder als zwischen den Bandpunkten 8 befindliche Masse bestimmt ist. Die Schritte S17 und S19 sind auch dann erforderlich, wenn der Abstand a der Bandpunkte 8 voneinander durch den Zeittakt T bestimmt ist, das Verfahren von FIG 3 also nicht nur zyklisch, sondern sogar getaktet ausgeführt wird. Denn wenn die ersten Bandpunkte 8, also der Bandkopf, in die Walzstraße 8 einlaufen, laufen noch keine Bandpunkte 8 aus der Walzstraße aus. Umgekehrt laufen die letzten Bandpunkte 8, also der Bandfuß, erst lange nachdem die letzten Bandpunkte 8 in die Walzstraße eingelaufen sind, wieder aus der Walzstraße aus.

Aufgrund des Umstands, dass in den Schritten S1 bis S12 die Einstellgerüstgrößen A^{*} der entsprechenden Bandpunkte 8 für alle Walzgerüste 1 ermittelt werden und die Einstellgerüstgrößen A^{*} für diejenigen Bandpunkte 8, welche die Walzstraße vor den neu hinzu kommenden Bandpunkten 8 durchlaufen, aufgrund des Funktionsprinzips von FIG 3 bereits zuvor ermittelt wurden, sind anhand der den Bandpunkten 8 zugeordneten Einstellgerüstgrößen A* zumindest für die hinteren Walzgerüste 1 - eventuell auch für das vordere Walzgerüst 1 - Trajektorien für die Einstellgerüstgrößen A* berechenbar.

Wenn eine Leitgeschwindigkeit oder ein entsprechender Verlauf gegeben ist, können die Trajektorien als Funktion der Zeit t ermittelt werden. Denn in diesem Fall ist anhand der Leitgeschwindigkeit bzw. des entsprechenden Verlaufs ermittelbar, wann welcher Bandpunkt 8 in welchem Walzgerüst 1 gewalzt wird. Auch wenn die Leitgeschwindigkeit nicht gegeben ist, sind die Trajektorien als Funktion des Massenflusses m' ermittelbar. Der Massenfluss m' kann für jedes Walzgerüst 1 beispielsweise durch die Bandmasse gegeben sein, die am jeweiligen Walzgerüst 1 vorbeigelaufen ist. Gegebenenfalls kann bei jedem Walzgerüst 1 ein walzgerüstspezifischer Offset berücksichtigt werden, um die Abszissen der einzelnen Trajektorien relativ zueinander zu vereinheitlichen.

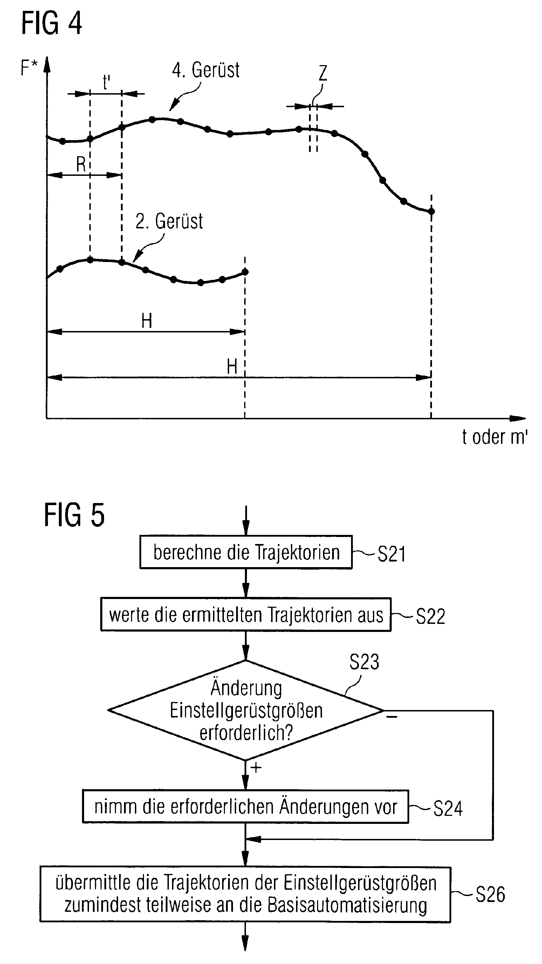

FIG 4 zeigt - rein beispielhaft - die Sollwalzkraft F^{*} am zweiten und das Walzmoment M am vierten Walzgerüst 1 der Walzstraße als mögliche Einstellgerüstgrößen A^{*}. FIG 4 zeigt weiterhin, dass die Abszisse alternativ die Zeit t oder der Massenfluss m' - sein kann. Aus FIG 4 ist weiterhin ersichtlich, dass die Trajektorien sich für jedes hintere Walzgerüst 1 jeweils zumindest von dem Zeitpunkt, zu dem der jeweilige Bandpunkt 8 in das vordere Walzgerüst 1 einläuft, bis zu dem Zeitpunkt erstrecken, zu dem der jeweilige Bandpunkt 8 in das jeweilige hintere Walzgerüst 1 einläuft.

Nachfolgend wird in Verbindung mit FIG 5 eine mögliche Art der Auswertung der ermittelten Trajektorien durch den Rechner 3 erläutert.

Gemäß FIG 5 berechnet der Rechner 3 in einem Schritt S21 die Trajektorien. In einem Schritt S22 wertet der Rechner 3 die ermittelten Trajektorien aus. In einem Schritt S23 prüft der Rechner 3, ob die Auswertung ergeben hat, dass die Einstellgerüstgrößen A* geändert werden müssen. Falls dies erforderlich ist, nimmt der Rechner 3 in einem Schritt S24 die erforderlichen Änderungen vor.

Beispielsweise kann der Rechner 3 in den Schritten S22 bis S24 prüfen, ob Anlagengrenzen der Walzstraße eingehalten werden. Beispielsweise kann der Rechner 3 prüfen, ob für jedes Walzgerüst 1 das Walzmoment M und die Walzkraft F im zulässigen Rahmen bleiben. Wenn dies bei einem der hinteren Walzgerüste 1 nicht der Fall ist, kann beispielsweise eine Lastumverteilung vorgenommen werden.

Selbstverständlich können auch andere Anlagengrenzen entsprechend berücksichtigt werden, beispielsweise eine maximal mögliche Walzenumfangsgeschwindigkeit. Auch Verkopplungen - beispielsweise die Drehzahlabhängigkeit des maximal möglichen Walzmoments M - können berücksichtigt werden.

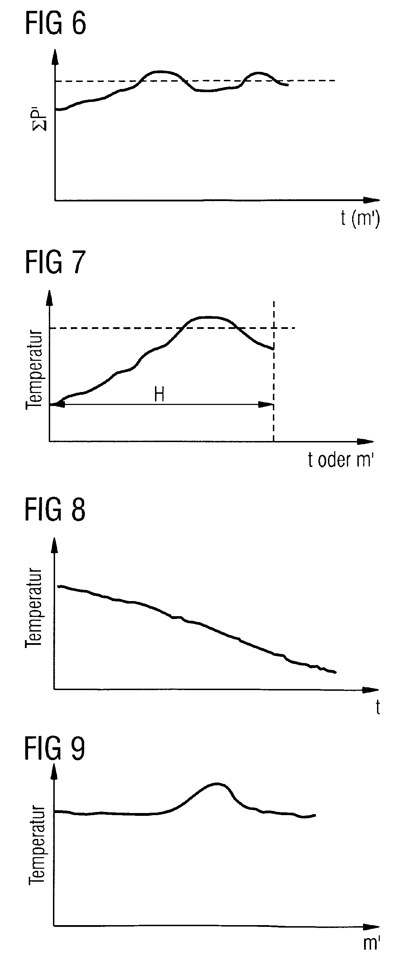

Es ist auch möglich, die Auswertung der Trajektorien walzgerüstübergreifend vorzunehmen. Beispielsweise kann - siehe FIG 6 - die Summe der Leistungen P' der Walzgerüstantriebe ermittelt werden und mit einer maximal zulässigen Grenzleistung (in FIG 6 gestrichelt eingezeichnet) verglichen werden.

Es ist weiterhin möglich, anhand der Trajektorien Zustandsgrößen der hinteren Walzgerüste 1 zu prognostizieren. In diesem Fall können die prognostizierten Zustandsgrößen ausgewertet werden. In Abhängigkeit von der Auswertung der prognostizierten Zustandsgrößen kann ebenfalls entschieden werden, ob und gegebenenfalls auf welche Weise die Einstellgerüstgrößen A^{*} variiert werden. Beispielsweise kann gemäß FIG 7 anhand des Leistungsverlaufs eines der hinteren Walzgerüste 1 der sich dadurch ergebende Temperaturverlauf des entsprechenden Walzgerüstantriebs prognostiziert werden. In diesem beispielhaften Fall kann eine Variierung der Einstellgerüstgrößen A^{*} erforderlich sein, wenn eine maximal zulässige Grenztemperatur überschritten wird.

Die Trajektorien werden in der Regel mit einer Modellierungsperiode t' berechnet. Die Modellierungsperiode t' entspricht in der Regel dem Abstand a der Bandpunkte 8 voneinander oder einem ganzzahligen Vielfachen davon. Die Auswertung der Trajektorien erfolgt gemäß den FIG 4, 6 und 7 mit einem Auswertungshorizont H, der ein Vielfaches der Modellierungsperiode t' ist. In der Regel liegt das Verhältnis von Auswertungshorizont H zu Modellierungsperiode t' bei 10:1 oder darüber. Auch Werte von 20:1 oder 30:1 und auch noch höhere Verhältnisse sind möglich.

Aus den oben stehenden Ausführungen zu FIG 5 ist ersichtlich, dass die Einstellgerüstgrößen A* aufgrund der Schritte S21 bis S24 unter Umständen geändert werden können. Die entsprechenden Auswertungen müssen daher vor dem Ansteuern des Walzgerüstes 1, für das die jeweilige Trajektorie gültig ist, erfolgen. Vorzugsweise erfolgt die Auswertung sogar vor dem Ansteuern des vorderen Walzgerüsts 1.

Das erfindungsgemäße Ermittlungsverfahren wird in der Regel zyklisch und/oder in Echtzeit durchgeführt. Im Falle der zyklischen Ausführung bezieht sich die zuletzt genannte Aussage ("vor dem Ansteuern des Walzgerüsts 1...") nur auf die Bandpunkte 8, die im letzten Zyklus aktuell hinzugekommen sind.

Im Rahmen der oben stehend in Verbindung mit FIG 3 erläuterten Vorgehensweise werden im Schritt S16 der Basisautomatisierung 9 "zeitrichtig" die Einstellgerüstgrößen A^{*} vorgegeben. Es ist möglich, dass der Rechner 3 die entsprechenden Einstellgerüstgrößen A^{*} direkt an die Basisautomatisierung 9 übermittelt. Auch hier ist jedoch alternativ eine Verwertung der Trajektorien möglich. Dies wird nachstehend ebenfalls in Verbindung mit FIG 5 erläutert. Die entsprechende Verwertung ist jedoch unabhängig von den Schritten S22 bis S24 von FIG 5 realisierbar. Der Schritt S21 ist allerdings vorhanden.

Falls die Trajektorien auch im Rahmen der Vorgabe der Einstellgerüstgrößen A^{*} an die Basisautomatisierung 9 verwertet werden, ist gemäß FIG 5 der Schritt S16 von FIG 3 durch einen Schritt S26 ersetzt. Im Schritt S26 übermittelt der Rechner 3 die Trajektorien der Einstellgerüstgrößen A^{*} zumindest teilweise an die Basisautomatisierung 9. Beispielsweise kann der Rechner 3 für jedes hintere Walzgerüst 1 ermitteln, welcher Bandpunkt 8 sich gerade im Einflussbereich des jeweiligen Walzgerüsts 1 befindet. Für jedes Walzgerüst 1 übermittelt der Rechner 3 sodann an die Basisautomatisierung 9 die aktuelle Einstellgerüstgröße A^{*} für das jeweilige Walzgerüst 1 sowie eine - meist geringe - Anzahl nachfolgender Einstellgerüstgrößen A^{*} für das jeweilige Walzgerüst 1 (beispielsweise die nächsten 2, 3 oder 5 Einstellgerüstgrößen A^{*}). Der Basisautomatisierung 9 werden daher zumindest für die hinteren Walzgerüste 1 entsprechende Verläufe der Einstellgerüstgrößen A* als Sollstellgrößen zur Verfügung gestellt.

Wie bereits erwähnt, werden die Trajektorien (im Schritt S21) mit einer Modellierungsperiode t' berechnet, wobei die Modellierungsperiode t' in der Regel dem Abstand a der Bandpunkte 8 voneinander oder einem ganzzahligen Vielfachen davon entspricht. Aufgrund der teilweisen Übermittlung der Trajektorien an die Basisautomatisierung 9 sind der Basisautomatisierung 9 die zukünftigen Einstellgerüstgrößen A^{*} für einen Regelzeitraum R bekannt, beispielsweise für die oben stehend erwähnten 2, 3 oder 5 Bandpunkte 8. Vorzugsweise ist der Regelzeitraum R größer als die Modellierungsperiode t'. Rein beispielhaft ist dies in FIG 4 dargestellt, wo als Modellierungsperiode t' der (einfache, nicht mehrfache) Abstand a der Bandpunkte 8 voneinander angenommen ist und der Regelzeitraum R gleich dem dreifachen der Modellierungsperiode t' ist. Ebenfalls in FIG 4 eingezeichnet, ist der Regelzyklus Z der Basisautomatisierung 9. Der Regelzyklus Z der Basisautomatisierung 9 ist erheblich kleiner als die Modellierungsperiode t'. Der Regelzyklus Z liegt in der Regel bei wenigen Millisekunden, meist bei 20 Millisekunden oder darunter.

Obenstehend wurde erläutert, dass den Bandpunkten 8 die Einstellgerüstgrößen A^{*} zugeordnet werden. Es ist möglich, den Bandpunkten 8 zusätzlich auch die erwarteten Gerüstgrößen G zuzuordnen. In diesem Fall ist es selbstverständlich auch möglich, die Trajektorien für die erwarteten Gerüstgrößen G zu berechnen. Beispielsweise kann in dem Bandpunkt 8 als Sollgröße ein Temperaturverlauf als Funktion der Zeit t vorgegeben sein - siehe FIG 8. In Verbindung mit dem Massenfluss m' oder dem Leitgeschwindigkeitsverlauf kann daher ein auf ein bestimmtes Walzgerüst 1 bezogener Temperaturverlauf ermittelt werden, mit dem das Metallband 2 dieses Walzgerüst 1 durchläuft bzw. die Bandpunkte 8 nach und nach dieses Walzgerüst 1 durchlaufen, siehe FIG 9.

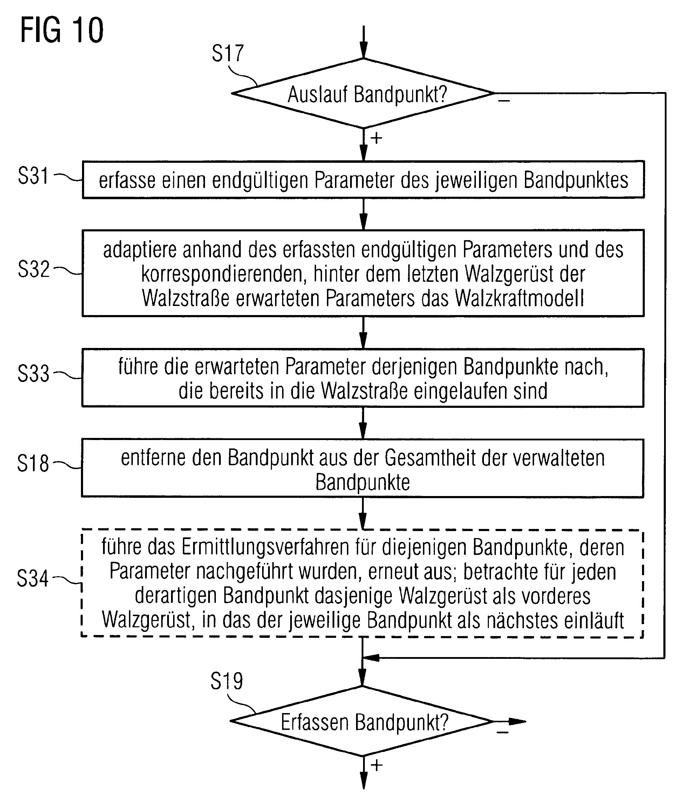

Das Ermittlungsverfahren, wie es bisher erläutert wurde, arbeitet bereits sehr gut. Es kann durch die Ausgestaltung, die nachfolgend in Verbindung mit FIG 10 erläutert wird, noch weiter verbessert werden. FIG 10 zeigt im wesentlichen Maßnahmen, die - zusätzlich zum Entfernen eines Bandpunkt 8 aus der Gesamtheit der verwalteten Bandpunkte 8 - von dem Rechner 3 ergriffen werden können, wenn ein Bandpunkt 8 aus der Walzstraße ausgelaufen ist.

Gemäß FIG 10 wird in einem Schritt S31 nach dem Auslaufen des jeweiligen Bandpunktes 8 aus der Walzstraße ein endgültiger Parameter PE des jeweiligen Bandpunktes 8 erfasst. Die Erfassung erfolgt in der Regel an einem entsprechenden Messplatz 10. Der erfasste Parameter PE kann beispielsweise die Temperatur oder die Geometrie des entsprechenden Bandpunktes 8 sein. Auch die Erfassung mehrerer Parameter PE - beispielsweise Temperatur und Enddicke oder Enddicke und Planheit - ist möglich.

In einem Schritt S32 wird das Walzkraftmodell 7 anhand des erfassten endgültigen Parameters PE und des korrespondierenden, hinter dem letzten Walzgerüst 1 der Walzstraße erwarteten Parameters P adaptiert. Die Adaption erfolgt im Schritt S32 in Echtzeit, also noch während andere Bandpunkte 8 sich in der Walzstraße befinden. Weiterhin werden in einem Schritt S33 die erwarteten Parameter P derjenigen Bandpunkte 8, die bereits in die Walzstraße eingelaufen sind (aber noch nicht aus der Walzstraße ausgelaufen sind), in Echtzeit nachgeführt. Die Vorgehensweise der Schritte S31 bis S33 ermöglicht die Adaption in Echtzeit und ist daher gegenüber einer Adaption im Rahmen einer Nachberechnung von großem Vorteil.

Für den Parameter "Temperatur" ist die Vorgehensweise der Schritte S31 bis S32 aus der DE 101 56 008 A1 bekannt. Für den Parameter "Geometrie" ist die Vorgehensweise der Schritte S31 bis S33 in der bereits erwähnten Europäischen Patentanmeldung "Echtzeit-Ermittlungsverfahren für Temperatur und Geometrie eines Metall-Warmbandes in einer Fertigstraße", Aktenzeichen der Anmelderin 201015307, detailliert beschrieben.

Zusätzlich zu den Schritten S31 bis S33 kann weiterhin ein Schritt S34 vorhanden sein. Der Schritt S34 ist jedoch nur optional und daher in FIG 10 nur gestrichelt eingezeichnet. Falls der Schritt S34 vorhanden ist, wird das Ermittlungsverfahren, das oben stehend in Verbindung mit den FIG 3 und 5 erläutert wurde, erneut ausgeführt, und zwar für diejenigen Bandpunkte 8, deren Parameter P im Schritt S33 nachgeführt wurden. Für die erneute Ausführung des Ermittlungsverfahrens, also die Ausführung des Ermittlungsverfahrens im Rahmen des Schrittes S34, wird für jeden derartigen Bandpunkt 8 jedoch dasjenige Walzgerüst 1 als vorderes Walzgerüst 1 angesehen, in das der jeweilige Bandpunkt 8 als nächstes einläuft.

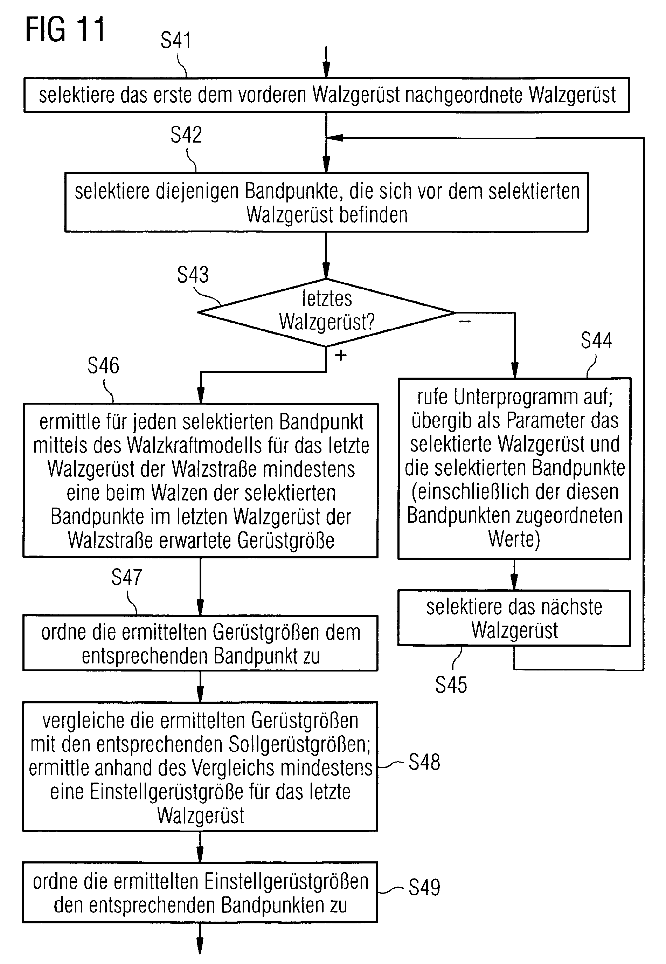

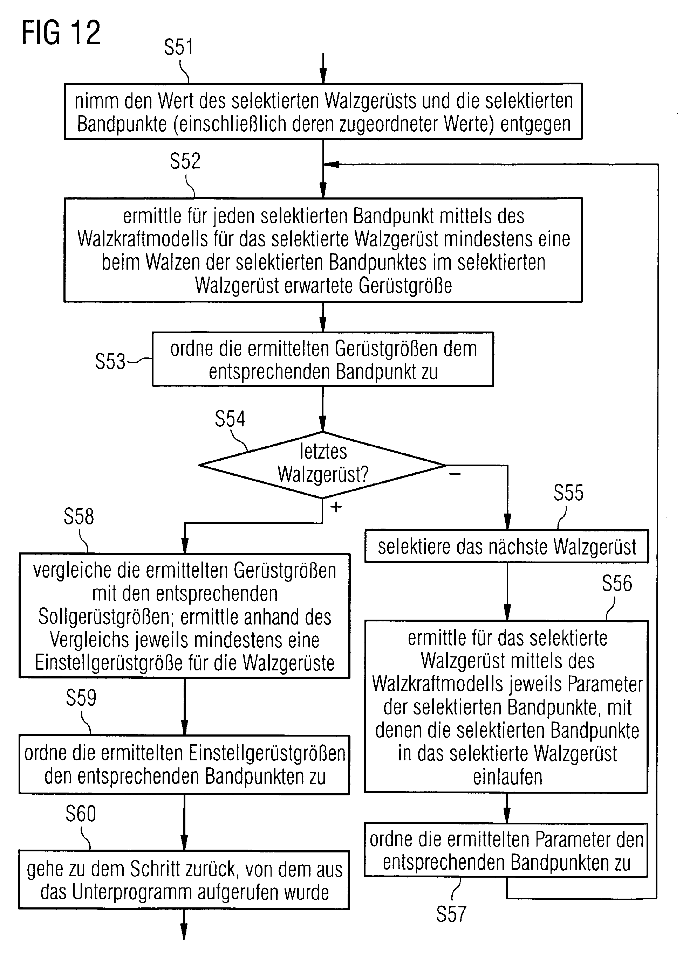

Der Schritt S34 wird nachstehend - zunächst in Verbindung mit FIG 11, später auch in Verbindung mit FIG 12 - näher erläutert.

Gemäß FIG 11 selektiert der Rechner 3 in einem Schritt S41 das erste dem vorderen Walzgerüst 1 von FIG 3 nachgeordnete Walzgerüst 1, beispielsweise das zweite Walzgerüst 1 der Walzstraße. In einem Schritt S42 selektiert der Rechner 3 diejenigen Bandpunkte 8, die sich jetzt, also zum Zeitpunkt der Ausführung des Schrittes S42, vor dem selektierten Walzgerüst 1 befinden. Diese Bandpunkte 8 haben also dasjenige Walzgerüst 1, das dem selektierten Walzgerüst 1 unmittelbar vorgeordnet ist, bereits durchlaufen, sind aber noch nicht in das selektierte Walzgerüst 1 eingelaufen.

In einem Schritt S43 prüft der Rechner 3, ob das selektierte Walzgerüst 1 das letzte Walzgerüst 1 der Walzstraße ist. Wenn dies nicht der Fall ist, geht der Rechner 3 zu einem Schritt S44 über, in dem er einen Unterprogrammaufruf durchführt. Als Parameter des Unterprogramms übergibt der Rechner 3 das selektierte Walzgerüst 1 und die selektierten Bandpunkte 8 (einschließlich der diesen Bandpunkten 8 zugeordneten Werte). Das selektierte Walzgerüst 1 wird im Rahmen des Unterprogrammaufrufs als Wert übergeben ("call by value"), die selektierten Bandpunkte 8 (einschließlich der zugeordneten Werte) als Variable ("call by reference"). Das aufgerufene Unterprogramm wird später in Verbindung mit FIG 12 erläutert werden.

In einem Schritt S45 selektiert der Rechner 3 das nächste Walzgerüst 1. Sodann geht der Rechner 3 zum Schritt S42 zurück.

Wenn der Rechner 3 bei der Prüfung des Schrittes S43 feststellt, dass bereits das letzte Walzgerüst 1 selektiert ist, geht der Rechner 3 zu einem Schritt S46 über. Im Schritt S46 ermittelt der Rechner 3 für jeden jetzt selektierten Bandpunkt 8 mittels des Walzkraftmodells 7 für das (nunmehr selektierte) letzte Walzgerüst 1 der Walzstraße mindestens einen beim Walzen der selektierten Bandpunkte 8 im letzten Walzgerüst 1 der Walzstraße erwartete Gerüstgröße G. In einem Schritt S47 ordnet der Rechner 3 die im Schritt S46 ermittelten Gerüstgrößen G den entsprechenden Bandpunkten 8 zu. Im Rahmen dieser Zuordnung werden etwaige frühere Werte der erwarteten Gerüstgrößen G überschrieben.

In einem Schritt S48 vergleicht der Rechner 3 die ermittelten Gerüstgrößen G mit den entsprechenden Sollgerüstgrößen G^{*}. Weiterhin ermittelt der Rechner 3 im Schritt S48 anhand des Vergleichs mindestens eine Einstellgerüstgröße A^{*} für das letzte Walzgerüst 1. In einem Schritt S49 ordnet der Rechner 3 die ermittelten Einstellgerüstgrößen A^{*} den entsprechenden Bandpunkten 8 zu.

Die Schritte S46 und S47 entsprechen im Wesentlichen - bezogen auf das letzte Walzgerüst 1 der Walzstraße - den Schritten S5 und S6 von FIG 3. Die Schritte S48 und S49 entsprechen im Wesentlichen den Schritten S11 und S12 von FIG 3.

Nachfolgend wird in Verbindung mit FIG 12 das bereits in Verbindung mit dem Schritt S44 von FIG 11 erwähnte Unterprogramm erläutert.

Gemäß FIG 12 nimmt das Unterprogramm zunächst in einem Schritt S51 den Wert des bei Aufruf des Unterprogramms selektierten Walzgerüsts 1 und die selektierten Bandpunkte 8 (einschließlich deren zugeordneter Werte) entgegen. Aufgrund der Art der Übergabe des Wertes für das Walzgerüst 1 (nämlich call by value) haben Änderungen des Wertes des selektierten Walzgerüsts 1, die innerhalb des Unterprogramms von FIG 12 vorgenommen werden, keinen Einfluss auf FIG 11.

Die Bandpunkte 8 selbst werden innerhalb des Unterprogramms von FIG 12 nicht geändert. Die Änderungen der den Bandpunkten 8 zugeordneten Werte, die innerhalb des Unterprogramms erfolgen, wirken jedoch aufgrund der Art der Wertübergabe (nämlich call by reference) auf FIG 11 zurück. Insbesondere gehen die im Rahmen des Unterprogramms von FIG 12 geänderten Werte der Bandpunkte 8 ggf. in die Ergebnisse ein, die in den Schritten S46 und S48 von FIG 11 ermittelt werden.

In einem Schritt S52 ermittelt der Rechner 3 für jeden selektierten Bandpunkt 8 mittels des Walzkraftmodells 7 für das selektierte Walzgerüst 1 mindestens eine beim Walzen des selektierten Bandpunktes 8 im selektierten Walzgerüst 1 erwartete Gerüstgröße G. In einem Schritt S53 ordnet der Rechner 3 die ermittelte Gerüstgröße G dem entsprechenden Bandpunkt 8 zu. Die Schritte S52 und S53 entsprechen - in Bezug auf das im Rahmen der Ausführung des Schrittes S52 selektierte Walzgerüst 1 - den Schritten S5 und S6 von FIG 3.

In einem Schritt S54 prüft der Rechner 3, ob das momentan im Rahmen des Unterprogramms selektierte Walzgerüst 1 das letzte Walzgerüst 1 der Walzstraße ist. Wenn dies nicht der Fall ist, geht der Rechner 3 zu einem Schritt S55 über, in dem der Rechner 3 - bezüglich des Unterprogramms von FIG 12 - das nächste Walzgerüst 1 selektiert. In einem Schritt S56 ermittelt der Rechner 3 für das nunmehr selektierte Walzgerüst 1 mittels des Walzkraftmodells 7 jeweils Parameter P der selektierten Bandpunkte 8, mit denen die selektierten Bandpunkte 8 in das nunmehr selektierte Walzgerüst 1 einlaufen. In einem Schritt S57 ordnet der Rechner 3 die ermittelten Parameter P den entsprechenden Bandpunkten 8 zu. Sodann geht der Rechner 3 zum Schritt S52 zurück. Die Schritte S55 bis S57 entsprechen im Wesentlichen den Schritten S8 bis S10 von FIG 3. Wenn der Rechner 3 im Rahmen des Unterprogramms von FIG 12 das letzte Walzgerüst 1 der Walzstraße selektiert hat, geht der Rechner 3 vom Schritt S54 zu einem Schritt S58 über. Im Schritt S58 vergleicht der Rechner 3 die ermittelten Gerüstgrößen G mit den entsprechenden Sollgerüstgrößen G^{*}. Weiterhin ermittelt der Rechner 3 im Schritt S58 anhand des Vergleichs jeweils mindestens eine Einstellgerüstgröße A^{*} für die Walzgerüste 1. In einem Schritt S59 ordnet der Rechner 3 die ermittelten Einstellgerüstgrößen A^{*} den entsprechenden Bandpunkten 8 zu. Die Schritte S58 und S59 entsprechen im Wesentlichen den Schritten S11 und S12 von FIG 3. Der Schritt S58 wird hierbei ab dem Walzgerüst 1, dessen Wert im Schritt S51 entgegen genommen wurde, bis zum letzten Walzgerüst 1 ausgeführt.

Im Schritt S60 geht der Rechner 3 zu dem Schritt S44 von FIG 11 zurück, von dem aus das Unterprogramm von FIG 12 aufgerufen wurde.

Das "doppelte" Vorhandensein der Schritte S48 und S58 ist nur scheinbar gegeben. Denn die Schritte S48 und S58 behandeln jeweils nur die Werte der momentan selektierten Bandpunkte 8. Alternativ zum Vorhandensein sowohl des Schrittes S48 als auch des Schrittes S58 ist es möglich, nur den Schritt S48, nicht aber den Schritt S58 vorzusehen. In diesem Fall müssen im Schritt S48 alle Bandpunkte 8 behandelt werden. Zusammen mit dem Schritt S58 entfällt in diesem Fall selbstverständlich auch der Schritt S59.

Die erfindungsgemäße Vorgehensweise weist - auch über die bereits in der Beschreibungseinleitung genannten Eigenschaften hinaus - viele Vorteile auf:
- Anlagengrenzen können genau einbezogen werden. Mit dem Ansatz wird im Voraus exakt das Erreichen irgendeines beliebigen Grenzwertes der Walzstraße erkannt, etwa die Drehmomentengrenze eines Antriebes, und darauf entsprechend z. B. mit einer Lastumverteilung reagiert
- Es können einer Endwalztemperaturregelung genaue Prognosen über künftige Anlagengrenzen mitgeteilt werden und veranlasst werden, dass die Endwalztemperaturregelung ihrerseits rechtzeitig eingreift, um das Überschreiten von Grenzen zu vermeiden.
- Die Abweichungen der Banddicke, die im Falle eines Modellfehlers am Bandkopf auftreten, werden schneller korrigiert. Dadurch wird das Filet, das ist derjenige Bandteil mit hoher Qualität, verlängert.

Die obige Beschreibung dient ausschließlich der Erläuterung der vorliegenden Erfindung. Der Schutzumfang der vorliegenden Erfindung soll hingegen ausschließlich durch die beigefügten Ansprüche bestimmt sein.

## Patentansprüche

1. Ermittlungsverfahren für Steuergrößen einer Walzstraße mit mehreren Walzgerüsten (1) zum Walzen eines Metallbandes (2),
- wobei vor dem Einlaufen von Bandpunkten (8) des Metallbandes (2) in ein vorderes Walzgerüst (1) der Walzstraße jeweils anfängliche Parameter (P) des jeweiligen Bandpunktes (8) erfasst werden, mit denen der jeweilige Bandpunkt (8) in das vordere Walzgerüst (1) einläuft, und der jeweilige Bandpunkt (8) in die aktive Auswertung übernommen wird,
- wobei mittels eines Walzkraftmodells (7) für das vordere Walzgerüst (1) mindestens eine beim Walzen des jeweiligen Bandpunktes (8) in dem vorderen Walzgerüst (1) erwartete Gerüstgröße (G) ermittelt wird,
- wobei mittels des Walzkraftmodells (7) weiterhin für dem vorderen Walzgerüst (1) nachgeordnete hintere Walzgerüste (1) jeweils Parameter (P) des jeweiligen Bandpunktes (8) ermittelt werden, mit denen der jeweilige Bandpunkt (8) in das jeweilige hintere Walzgerüst (1) einläuft,
- wobei mittels des Walzkraftmodells (7) weiterhin für die hinteren Walzgerüste (1) jeweils mindestens eine beim Walzen des jeweiligen Bandpunktes (8) in dem jeweiligen hinteren Walzgerüst (1) erwartete Gerüstgröße (G) ermittelt wird,
- wobei die erwarteten Gerüstgrößen (G) der Walzgerüste (1) mit jeweiligen dem jeweiligen Bandpunkt (8) zugeordneten Sollgerüstgrößen (G^{*}) verglichen werden und für das vordere Walzgerüst (1) und die hinteren Walzgerüste (1) anhand des Vergleichs jeweils mindestens eine jeweilige Einstellgerüstgröße (A^{*}) ermittelt wird,
- wobei zumindest die ermittelten Einstellgerüstgrößen (A^{*}) dem jeweiligen Bandpunkt (8) vor dem Einlaufen des jeweiligen Bandpunktes (8) in das vordere Walzgerüst (1) zugeordnet und mit dem jeweiligen Bandpunkt (8) durch die Walzstraße wegverfolgt werden,
- wobei anhand der den Bandpunkten (8) zugeordneten Einstellgerüstgrößen (A*) zumindest für die hinteren Walzgerüste (1) Trajektorien für die Einstellgerüstgrößen (A^{*}) berechenbar sind,
- wobei die Trajektorien sich für jedes hintere Walzgerüst (1) jeweils mindestens von dem Zeitpunkt, zu dem der jeweilige Bandpunkt (8) in das vordere Walzgerüst (1) einläuft, bis zu dem Zeitpunkt erstrecken, zu dem der jeweilige Bandpunkt (8) in das jeweilige hintere Walzgerüst (1) einläuft.

2. Ermittlungsverfahren nach Anspruch 1,
**dadurch gekennzeichnet ,**
**dass** die Trajektorien berechnet werden und dass die Trajektorien zumindest teilweise an eine Basisautomatisierung (9) übermittelt werden, so dass sie der Basisautomatisierung (9) als Verlauf von Sollstellgrößen für die hinteren Walzgerüste (1) zur Verfügung stehen.

3. Ermittlungsverfahren nach Anspruch 2,
**dadurch gekennzeichnet ,**
**dass** die Trajektorien mit einer Modellierungsperiode (t') berechnet werden und dass die Trajektorien zumindest für einen Regelzeitraum (R) an die Basisautomatisierung (9) übermittelt werden, der größer als die Modellierungsperiode (t') ist.

4. Ermittlungsverfahren nach Anspruch 1, 2 oder 3,
**dadurch gekennzeichnet ,**
**dass** die Trajektorien berechnet werden, dass die Trajektorien vor dem Ansteuern des Walzgerüsts (1), für das die jeweilige Trajektorie gültig ist, ausgewertet werden und dass in Abhängigkeit von der Auswertung entschieden wird, ob und ggf. auf welche Weise die Einstellgerüstgrößen (A^{*}) variiert werden.

5. Ermittlungsverfahren nach Anspruch 4,
**dadurch gekennzeichnet ,**
**dass** die Trajektorien mit einer Modellierungsperiode (t') berechnet werden und dass die Auswertung der Trajektorien mit einem Auswertungshorizont (H) erfolgt, der ein Vielfaches der Modellierungsperiode (t') ist.

6. Ermittlungsverfahren nach Anspruch 4 oder 5,
**dadurch gekennzeichnet ,**
**dass** anhand der Trajektorien Zustandsgrößen zumindest der hinteren Walzgerüste (1) prognostiziert werden, dass die prognostizierten Zustandsgrößen ausgewertet werden und dass in Abhängigkeit von der Auswertung entschieden wird, ob und ggf. auf welche Weise die Einstellgerüstgrößen (A^{*}) variiert werden.

7. Ermittlungsverfahren nach Anspruch 4, 5 oder 6,
**dadurch gekennzeichnet ,**
**dass** im Rahmen der Auswertung der Trajektorien Anlagengrenzen der Walzstraße berücksichtigt werden.

8. Ermittlungsverfahren nach einem der Ansprüche 4 bis 7,
**dadurch gekennzeichnet ,**
**dass** die Auswertung der Trajektorien walzgerüstübergreifend erfolgt.

9. Ermittlungsverfahren nach einem der obigen Ansprüche,
**dadurch gekennzeichnet ,**
**dass** dem jeweiligen Bandpunkt (8) auch die erwarteten Gerüstgrößen (G) zugeordnet werden und dass auch die Trajektorien für die erwarteten Gerüstgrößen (G) berechenbar sind.

10. Ermittlungsverfahren nach einem der obigen Ansprüche,
**dadurch gekennzeichnet ,**
**dass** es zyklisch und in Echtzeit ausgeführt wird.

11. Ermittlungsverfahren nach einem der obigen Ansprüche,
**dadurch gekennzeichnet ,**
**dass** Ermittlungsvorschriften, mittels derer die erwarteten Gerüstgrößen (G), die Parameter (P) der Bandpunkte (8) und die Einstellgerüstgrößen (A^{*}) ermittelt werden, stetige Abbildungen sind.

12. Ermittlungsverfahren nach einem der obigen Ansprüche,
**dadurch gekennzeichnet ,**
**dass** nach dem Auslaufen des jeweiligen Bandpunktes (8) aus der Walzstraße zumindest ein endgültiger Parameter (PE) des jeweiligen Bandpunktes (8) erfasst wird, dass das Walzkraftmodell (7) anhand des erfassten endgültigen Parameters (PE) und des hinter dem letzten Walzgerüst (1) der Walzstraße erwarteten Parameters (P) in Echtzeit adaptiert wird und dass die erwarteten Parameter (P) derjenigen Bandpunkte (8), die bereits in die Walzstraße eingelaufen sind, in Echtzeit nachgeführt werden.

13. Ermittlungsverfahren nach Anspruch 12,
**dadurch gekennzeichnet ,**
**dass** es nach dem Adaptieren des Walzkraftmodells (7) und dem Nachführen der erwarteten Parameter (P) für diejenigen Bandpunkte (8), deren Parameter (P) nachgeführt wurden, erneut ausgeführt wird und dass für die erneute Ausführung des Ermittlungsverfahrens dasjenige Walzgerüst (1) als vorderes Walzgerüst angesehen wird, in das der jeweilige Bandpunkt (8), dessen Parameter (P) nachgeführt wurden, als nächstes einläuft.

14. Ermittlungsverfahren nach einem der obigen Ansprüche,
**dadurch gekennzeichnet ,**
**dass** spätestens zum Zeitpunkt des Erfassens der anfänglichen Parameter (P) des jeweiligen Bandpunktes (8) ein Leitgeschwindigkeitsverlauf bekannt ist, mit dem der jeweilige Bandpunkt (8) die Walzstraße durchlaufen soll.

15. Computerprogramm, das Maschinencode (6) umfasst, der von einem Rechner (3) unmittelbar abarbeitbar ist und dessen Abarbeitung durch den Rechner (3) bewirkt, dass der Rechner (3) ein Ermittlungsverfahren mit allen Schritten eines Ermittlungsverfahrens nach einem der obigen Ansprüche ausführt.

16. Rechner,
**dadurch gekennzeichnet ,**
**dass** der Rechner derart ausgebildet ist, dass er ein Ermittlungsverfahren mit allen Schritten eines Ermittlungsverfahrens nach einem der Ansprüche 1 bis 14 ausführt.

17. Walzstraße mit mehreren Walzgerüsten (1) zum Walzen von Metallband (2),
**dadurch gekennzeichnet ,**
**dass** die Walzstraße mit einem Rechner (3) nach Anspruch 16 ausgestattet ist.
